Europäisches Patentamt

European Patent Office

Office européen des brevets

(19)

(11) Publication number: **0 310 443 B1**

(12) **EUROPEAN PATENT SPECIFICATION**

(45) Date of publication of patent specification: 30.09.92

(51) Int. Cl.5: **B01J 27/04**, B01J 37/20, C01G 47/00, C10G 45/04

(21) Application number: 88309146.4

(22) Date of filing: 30.09.88

(54) **Preparation of high surface area rhenium sulfide hydrodesulfurization catalysts, and their use.**

(30) Priority: 02.10.87 US 103662

(43) Date of publication of application:
05.04.89 Bulletin 89/14

(45) Publication of the grant of the patent:
30.09.92 Bulletin 92/40

(84) Designated Contracting States:
BE DE FR GB IT

(56) References cited:
EP-A- 0 171 312
FR-A- 2 254 553
US-A- 3 389 965
US-A- 3 663 431
US-A- 4 308 171

(73) Proprietor: **EXXON RESEARCH AND ENGI-
NEERING COMPANY**
**P.O.Box 390, 180 Park Avenue**
**Florham Park, New Jersey 07932(US)**

(72) Inventor: **Passaretti-Miscia, June Diane**
**480 Lyons Road**
**Liberty Corners New Jersey 07938(US)**

(74) Representative: **Somers, Harold Arnold et al**
**ESSO Engineering (Europe) Ltd. Patents &
Licences Mailpoint 72 Esso House Ermyn
Way**
**Leatherhead, Surrey KT22 8XE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to a process for the preparation of high surface area rhenium sulfide hydrodesulfurization catalysts and to a process of using such catalysts for hydrotreating, particularly hydrodesulfurizing heavy hydrocarbons. The catalyst may be supported during use. They are preferably made using an aqueous procedure for forming the solid $ReS_{2+x}$ precursor. The precursor is then heated for a sufficient period of time in a stream of substantially pure $H_2S$ to form the catalyst.

The petroleum industry is increasingly turning to coal, tar sands, heavy crudes and distilled residual oils as sources for feedstocks. Feedstocks derived from these heavy materials often contain more sulfur and nitrogen than feedstocks derived from more conventional crude oils. They are commonly referred to as being dirty feeds. These feeds require a considerable amount of upgrading before being introduced into processes which make lighter products such as fuel oil or gasoline. Such upgrading or refining generally is accomplished by the hydrotreating processes which are well known in the petroleum industry.

Hydrotreating processes may require the step of treating the hydrocarbon with hydrogen and usually a catalytic material to hydrogenate aromatics and other unsaturates to form aliphatic compounds, or to remove unwanted components or compounds such as nitrogen- or sulfur-bearing compounds, or to convert unwanted components into innocuous or less undesirable compounds. Hydrotreating may be applied to a wide variety of feedstocks, e.g., solvents; light, middle or heavy distillate feeds and residual feeds; or fuels. In hydrorefining relatively light feeds, the feeds are treated with hydrogen often to improve odor, color, stability, or combustion characteristics. Unsaturated hydrocarbons are often hydrogenated to saturation. Sulfur- and nitrogen-bearing compounds are occasionally removed as part of such treatments. In the treatment of catalytic cracking feedstocks, the cracking quality of the feedstock is generally improved by a prior hydrotreating step such that elemental carbon yield is reduced and gasoline yield is increased. In the hydrodesulfurization ("HDS") of heavier feedstocks, or residua, the sulfur compounds are hydrogenated and cracked. Carbon-sulfur bonds are broken, and the sulfur, for the most part, is converted to hydrogen sulfide which is removed in gaseous form from the process. Hydrodenitrogenation ("HDN"), to some degree, also accompanies hydrodesulfurization reactions.

Catalysts which are most commonly used for hydrotreating reactions include materials such as cobalt molybdate on alumina, nickel on alumina, cobalt molybdate promoted with nickel, nickel tungstate, etc. Molybdenum sulfide is also widely used to upgrade oils containing sulfur and nitrogen compounds by catalytically removing such compounds in the presence of hydrogen.

The use of various rhenium and sulfur containing catalysts in the hydrodesulfurization of heavy feedstocks is known. For instance, U.S. Patent No. 3,663,431, to Wagner, issued May 16, 1972, suggests the use of rhenium disulfide as a catalyst in the HDS of various heavy hydrocarbons. U.S. Patent Nos. 4,308,171 and 4,368,115 suggest non-aqueous preparations of rhenium sulfides and that rhenium sulfides may be suitable as HDS catalysts.

U.S. Patent 4,299,892 discloses a layered-sheet configuration of dichalcogenides of Group IVb, Vb, molybdenum and tungsten.

None of these references show $ReS_{2+x}$ where x is $> 0$ and $\leq 2$ and where the materials have a specific surface area of 40 $m^2/g$ or greater and are amorphous to X-ray. None of the catalysts of these references is prepared by the aqueous preparation of the catalyst of the present invention or has an HDS activity as high as does the catalyst of the invention.

The present invention provides a method of producing a hydrotreating catalyst having the formula $ReS_{2+x}$, where $1 \geq x > 0$, which comprises the steps of:

(a) forming an aqueous solution of a rhenium-containing compound;

(b) treating the aqueous solution of step (a) with an acidic buffered solution to obtain a pH of between 4.0 and 4.5 (e.g., 4.2);

(c) purging the resulting solution of step (b) with $H_2S$ and heating;

(d) separating the solution of step (c) and rinsing the remaining solid product with $H_2O$; and

(e) treating the product of step (d) with an $H_2S$ stream at a temperature from 425°C to 725°C - (e.g., from 500 to 600°C), for sufficient time to form the catalyst (e.g. from 1 to 4 hours).

More specifically, the catalysts of the present invention are made by reacting an aqueous solution of a rhenium-containing compound, preferably an $ReO_4^-$-containing compound, more preferably $Re_2O_7$ or $(NH_4)ReO_4$, in an acidic buffered solution with $H_2S$ to produce a rhenium sulfide precursor. The reaction conditions in that precipitation reaction are believed to be critical in producing an active catalyst. The pH of the solution must be held in the narrow range between 4.0 and 4.5. The $ReO_4^-$ per milliliter of water ratio should preferably be held in the narrow limits between 0.1 g/ml and 0.15 g/ml. The black precipitate which forms may then be filtered and preferably rinsed with deionized water. The recovered black solids must

2

then be treated with either a substantially pure hydrogen sulfide stream or one containing a high percentage of hydrogen sulfide (and no other reductants), as well as inert gases such as neon, argon, or nitrogen. Apparently the solids produced by the aqueous synthesis require a hydrogen sulfide treatment of from 1 to 4 hours at from 425°C to 725°C, preferably at 500°C to 600°C, to produce the active HDS catalyst of the invention. The final catalyst has a form of $ReS_{2+x}$ where x is > 0 but ≤ 1. The precursor is substantially amorphous to X-ray crystallographic measurements and has a specific surface area of about 40 $m^2$/gm or greater.

## BRIEF DESCRIPTION OF THE DRAWINGS

Figure 1 is a schematic representation of the process steps required in producing the catalyst of the instant invention.

Figure 2 shows the X-ray diffraction patterns of the inventive catalyst as a function of the heat-treating temperature.

Figure 3 shows the HDS activity of various catalysts as functions of the heat-treat temperature and method of preparation.

## DESCRIPTION OF THE INVENTION

As noted above, this invention deals with a bulk or supported rhenium sulfide containing hydroprocessing catalyst having a high initial surface area prior to treatment with $H_2S$.

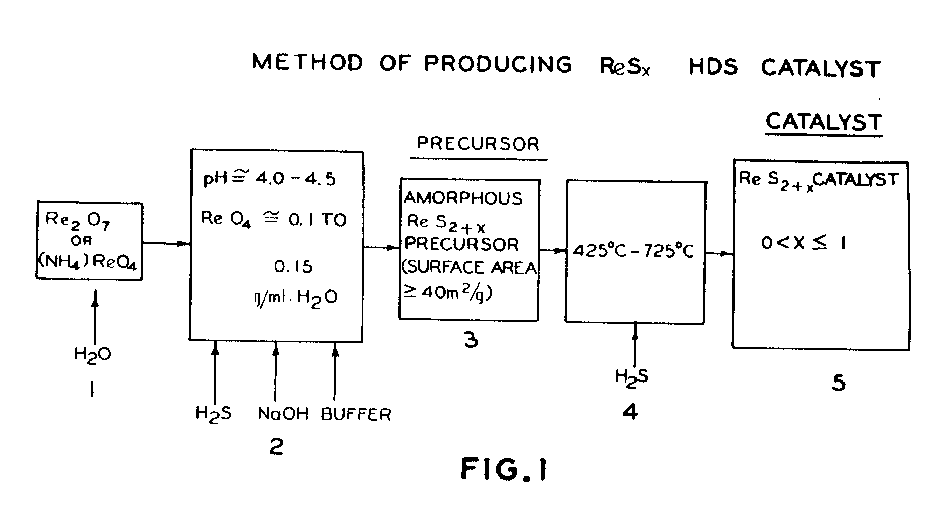

The process steps of producing the catalysts are summarized in Figure 1. Referring to Figure 1, the catalysts are made by taking an aqueous solution of a rhenium-containing compound, preferably an $ReO_4^-$-containing compound, more preferably $Re_2O_7$ or $(NH_4)ReO_4$ (1), treating it in an acidic buffered solution, preferably acetic acid and NaOH, and purging it with $H_2S$ (2) and heating to produce a rhenium sulfide precursor (3). The reaction conditions in that precipitation reaction are believed to be critical in producing an active catalyst. The pH of the solution must be held in the narrow range between 4.0 and 4.5. The $ReO_4^-$-per milliliter of water ratio preferably should be held in the narrow limits between 0.1 g/ml and 0.15 g/ml, more preferably at 0.12 g/ml. The black precipitate which forms may then be separated, as for example by filtering, and is preferably rinsed with deionized water. The recovered black solids, the precursor (3), must then be treated with hydrogen sulfide, e.g., preferably a substantially pure hydrogen sulfide stream or one containing a high percentage of hydrogen sulfide (and no other reductants), as well as inert gases such as neon, argon, or nitrogen (4). Apparently the solids produced by the aqueous synthesis require a treatment with $H_2S$, preferably substantially pure $H_2S$. The $H_2S$ stream may also contain inert gases, e.g. neon, argon, or nitrogen (and no other reductants), but normally preferably contains at least about 90% $H_2S$, more preferably 95% $H_2S$. The treatment is for a sufficient time period to form the catalyst, preferably 1 to 4 hours, at from 425°C to 725°C, more preferably at 500°C to 600°C, to produce the active HDS catalyst of the invention. The final catalyst has a form of $ReS_{2+x}$ where x is > 0 but ≤ 1. The precursor is substantially amorphous to X-ray crystallographic measurements and has a specific surface area of about 40 $m^2$/g or greater.

The catalyst material having the form $ReS_{2+x}$, where 1 ≥ x > 0, may be combined with a support material. The support may be any acidic, basic, or mixed oxide type materials, preferably alumina, silica, silica-alumina, titania, vanadia, niobia, or any other transition metal oxide or a zeolite. Alternatively, the support may be a transition metal sulfide, preferably molybdenum sulfide. The support may also be carbon, preferably active carbon or graphite carbon, or carbon sulfide of the form $C_xS$. This combined $ReS_{2+x}$/support composition functions as an active hydrodesulfurization catalyst.

The inventive catalysts disclosed herein are to be used in processes for hydrotreating, particularly hydrodesulfurizing, sulfur-bearing hydrocarbon oil streams. The procedures are well known, and the following processes are offered for exemplary purposes. In one embodiment of the process, small particles of the inventive catalyst are introduced into a hydrocarbon stream containing sulfur compounds. These sulfur-bearing hydrocarbon streams typically have boiling points above about 400°F (204.4°C) and less than about 1050°F (565.6°C) and may contain up to 5% by weight of sulfur. The catalyst is included in the feedstock oil in an amount sufficient to provide a ratio of Re:S (in hydrocarbon) of between about 0.0014/1 and 0.14/1; preferably 0.01 to 0.1. The reaction zone can be at a partial pressure of hydrogen between about 100 and 1500 psia (0.6895 and 10.3425 MPa); preferably between about 300 and 700 psia (2.069 and 4.827 MPa). The total pressure in the reaction zone may be between 150 and 1600 psia (1.034 and 11.032 MPa); preferably between 350 and 800 psia (2.413 and 5.516 MPa). The reaction temperature may be controlled between about 200°C and 390°C; preferably 300°C and 360°C.

EXAMPLE 1

Preparation of High Surface Area Precursor

A sample of $(NH_4)ReO_4$ was added to water in the ratio of 0.13 g $ReO_4^-$ per ml water. For every 7.5 ml $H_2S$, 1 ml acetic acid was added. For every 3.4 ml acetic acid, approximately 1 g NaOH was added until the pH was 4.2. The solution was purged with $H_2S$ for 30 minutes, then heated to 50°C for six hours while continuing $H_2S$ purge (50 $cm^3$/min). After six hours, the solid product (black) was filtered out of solution by means of vacuum filtration, collected on a fritted funnel and washed with hot $H_2O$. The solid was then soxhletted with $H_2O$ for 24 to 48 hours to remove any unreacted $(NH_4)ReO_4$. The solid was then dried in a vacuum at room temperature overnight.

The BET surface area of the precursor product was 45.0 $m^2$/g.

The precursor product was subjected to thermogravimetric analysis (TGA) under argon for a temperature range of room temperature to 825°C. The heating rate was 10°C/minute. The product was subjected to powder X-ray diffraction measurements before and after the TGA. Before the TGA, the X-ray diffraction was substantially amorphous. Initial composition of the high surface area rhenium sulfide was $ReS_{3.75}$ $XH_2O$. From 0 to 200°C the removal of weakly held $H_2O$ and volatilization of S in excess of that corresponding to $Re_2S_7$ occurred. Between 200°C and 400°C, $Re_2S_7$ decomposes to $ReS_3$. Between 400°C and 600°C, $ReS_3$ decomposes to $ReS_2$. The total Re:S ratio was $ReS_{2.43}$ at 400°C and $ReS_{2.22}$ at 600°C. At 825°C, decomposition to $ReS_2$ was complete and crystalline $ReS_2$ could be seen in the powder diffraction X-ray pattern of the TGA product.

EXAMPLE 2
(Comparative)

Preparation of a Low Surface Area Precursor

The procedure of Example 1 was followed except that the pH of the reaction solution was maintained at 2.0 rather than 4.5.

The BET surface area of the material was 2.5 $m^2$/g.

The TGA of the low surface area material showed a steady decrease in weight up to 825°C, there continued to be a weight loss until the TGA experiment was stopped. The Re:S stoichiometry went from $ReS_{3.21}$ at room temperature to $ReS_{1.90}$ at 825°C.

EXAMPLE 3

Preparation of HDS Catalysts

Two to three gram samples of the rhenium sulfide obtained from Example 1 (the high surface area precursor) or Example 2 (the low surface area precursor) were placed in a furnace tube and purged with nitrogen for thirty minutes before exposing the solid to 100% $H_2S$ or 15% $H_2S/H_2$ (as in the case of a second batch of low surface area precursor to determine what effect, if any, concentration of $H_2S$ in the catalyst pretreatment gas has upon catalyst activity). $H_2S$ or 15% $H_2S/H_2$ was purged through the furnace tube and the furnace was brought up to its prescribed temperature for a period of 90 minutes. The samples were treated in this respective manner at 350, 400, 450, 500, 600, 700 and 1000°C. All samples were cooled under the heat treatment gas (100% $H_2S$ or 15% $H_2S/H_2$) to 100°C where they were further cooled to room temperature under $N_2$.

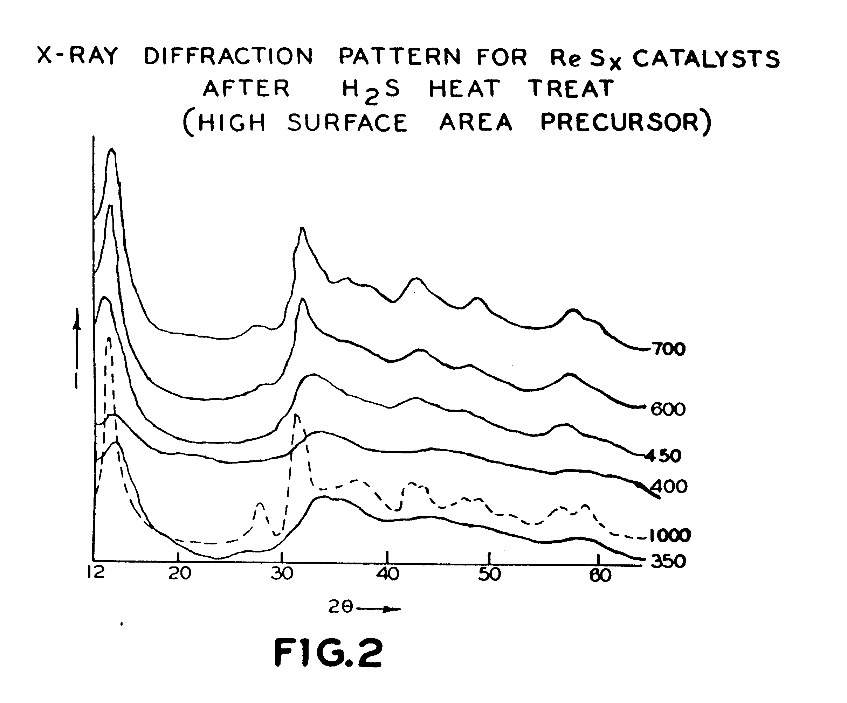

The various X-ray diffraction patterns for the $H_2S$-treated precursors (now called catalyst), produced at each of the noted temperatures, are shown in Figure 2. At temperatures above about 400°C, some incomplete crystallization of $ReS_2$ is apparent. However, even at 1000°C, the crystallization is not complete.

EXAMPLE 4

HDS Activity Evaluation

The catalyst activity of the rhenium sulfide samples which were heat treated in Example 3 were determined for the hydrodesulfurization (HDS) of dibenzothiophene (DBT) in decalin. The DBT (Aldrich Chemical Company) (Matheson) were used without further purification. The reactor feed was prepared by dissolving 4.4 g of DBT in 1000 $cm^3$ of hot decalin. This solution contained about 5 wt.% DBT or 0.8 wt.% sulfur. The HDS evaluations were done in a Carberry type autoclave. The reactor was designed to allow a constant flow of 100 $cm^3$ $H_2$/min during the reaction and also to permit liquid sampling during the reaction. The autoclave was fitted to a condenser so that despite $H_2$ flow, all organic materials were retained.

The catalyst (1 g, 20/40 (Tyler) (0.853/0.381 mm) mesh-pressed powder) was diluted with 1/16" (1.588 mm) porcelain beads and placed into a 10 $cm^3$ basket. At ambient temperatures, an $H_2$ flow rate of 100 $cm^3$/min was established and the reactor was charged with feed. The pressure was set to 450 psi (3.103 MPa) and the reactor temperature raised to 350°C. Liquid sampling commenced when reactor temperature reached 350°C. Samples were taken every 1/2 hour and were analyzed with a Perkin Elmer 900 gas chromatograph using a flame ionization detector. In order to obtain rate constants, the concentrations of the three products (biphenyl, cyclohexylbenzene and bicyclohexane) which result from the hydrodesulfurization of DBT were summed and plotted against time. Conversions of DBT < 30% were used. In this regime, essentially linear concentration vs. time plots will be obtained even if first-order dependence on DBT concentration prevails. Thus, even in the absence of knowledge of the true reaction order under our conditions, the slopes of the linear concentration vs. time plots which obtained sufficed to provide relative rate constants for these catalysts.

Table I below shows the reaction rate and surface area of the precursors which had been heat treated in 100% $H_2S$ (Set A - high surface area precursor and Set B - low surface area precursor) or 15% $H_2S/H_2$ - (Set C - low surface are precursor only).

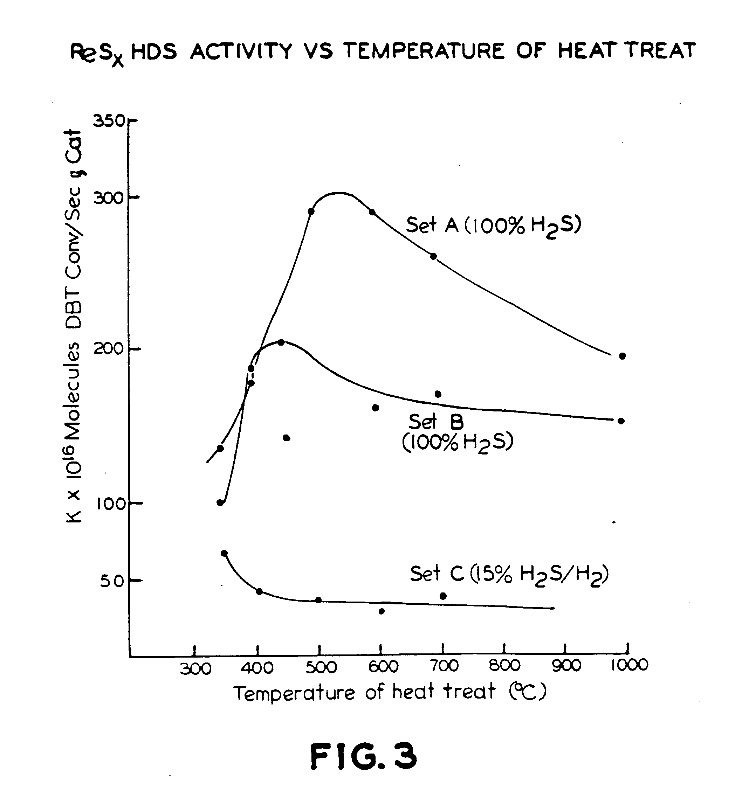

The HDS activity for these three materials is portrayed in Figure 3. The clearly superior HDS activity for the Set A material heat treated between 425°C and 725°C is apparent both from Table I and from Figure 3, which show catalytic activity as measured by the activity rate constant for the hydrodesulfurization of dibenzothiophene (DBT) in decalin of greater than about $200 \times 10^{16}$ molecules DBT conv/sec g catalyst.

Having thus described the invention and provided examples relating thereto, it should be apparent that various modifications and changes can be made without departing from the invention as defined by the following claims.

Table I

| Precursor | Heat Treat Temperature | % H₂S in Heat Treat | Surface Area (m²/gm) | | K x 1016 Molecules DBT Conv/Sec g Cat. |
| --- | --- | --- | --- | --- | --- |
| | | | After Heat Treat | After HDS Evaluation | |
| Set A (High Surface Area) | 350 | 100 | 23.3 | 23.8 | 136 |
| | 400 | 100 | 20.0 | 20.8 | 128 |
| | 450 | 100 | 20.3 | 19.3 | 231 |
| | 500 | 100 | 18.4 | 21.0 | 286 |
| | 600 | 100 | 16.0 | 25.0 | 286 |
| | 700 | 100 | 18.8 | N.A. | 259 |
| | 1000 | 100 | 17.5 | 22.3 | 191 |
| Set B (Low Surface Area) | 350 | 100 | 3.6 | 4.6 | 99 |
| | 400 | 100 | 14.0 | 5.6 | 185 |
| | 450 | 100 | 3.4 | 5.4 | 204 |
| | 500 | 100 | 3.1 | 4.7 | 183 |
| | 600 | 100 | 3.1 | 5.5 | 161 |
| | 700 | 100 | 3.0 | 6.8 | 169 |
| | 1000 | 100 | 9.2 | 14.0 | 148 |
| Set C (Low Surface Area) | 350 | 15 | 3.7 | 4.1 | 67 |
| | 400 | 15 | 6.6 | 6.1 | 42 |
| | 450 | 15 | 4.3 | 5.0 | 141 |
| | 500 | 15 | 7.1 | 5.9 | 36 |
| | 600 | 15 | 2.2 | 2.3 | 28 |
| | 700 | 15 | 2.2 | 3.2 | 39 |
| | 1000 | 15 | - | - | ** |

**This material was not HDS evaluated because it was found to have been reduced to be metal during 15% H₂S/H₂ pretreatment. This was determined by examination of the X-ray diffraction pattern.

## Claims

1. A method of producing a hydrotreating catalyst having the formula $ReS_{2+x}$, where $1 \geq x > 0$, which comprises the steps of:

EP 0 310 443 B1

(a) forming an aqueous solution of a rhenium-containing compound;

(b) treating the aqueous solution of step (a) with an acidic buffered solution to obtain a pH of between 4.0 and 4.5;

(c) purging the resulting solution of step (b) with $H_2S$ and heating;

(d) separating the solution of step (c) and rinsing the remaining solid product with $H_2O$; and

(e) treating the product of step (d) with an $H_2S$ stream containing substantially no other reductant at a temperature from 425°C to 725°C, for sufficient time to form the catalyst.

2. The method of claim 1 wherein the temperature in step (e) is from 500°C to 600°C.

3. The method of claim 1 or claim 2 wherein in step (b) the acidic buffered solution is acetic acid and NaOH.

4. The method of any one of claims 1 to 3 wherein in step (b) the pH is 4.2.

5. The method of any one of claims 1 to 4 wherein the rhenium-containing compound is a $ReO_4{}^-$-containing compound.

6. The method of any one of claims 1 to 5 wherein the rhenium-containing compound comprises $(NH_4)$-$ReO_4$ or $Re_2O_7$.

7. The method of any one of claims 1 to 6 wherein step (e) is performed for a period in the range of from 1 to 4 hours.

8. The method of any one of claims 1 to 7 wherein the recovered catalyst has a catalytic activity as measured by the activity rate constant for the hydrodesulfurization of dibenzothiopene (DBT) in decalin of greater than about $200 \times 10^{16}$ molecules DBT conv/sec g catalyst.

9. The method of any one of claims 1 to 8 comprising the step of combining a support material with the product of step (e).

10. The method of claim 9 wherein the support material is an acidic or mixed oxide, a transition metal sulfide, or carbon.

11. The method of claim 10 wherein the acidic or mixed oxide is alumina, silica, silica-alumina, titania, vanadia, niobia, or any transition metal oxide, the transition metal sulfide is molybdenum sulfide, and the carbon is active carbon or graphite carbon.

12. A hydrotreating process, such as a hydrodesulfurization process, comprising contacting a hydrocarbon feed with a catalyst made by the method according to any one of claims 7 to 11 under hydrotreating conditions.

**Patentansprüche**

1. Verfahren zur Herstellung eines Wasserstoffbehandlungskatalysators mit der Formel $ReS_{2+x}$ mit $1 \geq x > 0$, bei dem

(a) eine wäßrige Lösung einer Rhenium enthaltenden Verbindung bereitet wird,

(b) die wäßrige Lösung aus Stufe (a) mit einer sauer gepufferten Lösung behandelt wird, um einen pH-Wert zwischen 4,0 und 4,5 zu erhalten,

(c) durch die aus Stufe (b) resultierende Lösung $H_2S$ geleitet und erwärmt wird,

(d) die Lösung aus Stufe (c) abgetrennt und das verbleibende feste Produkt mit Wasser gespült wird und

(e) das Produkt aus Stufe (d) ausreichend lange mit einem $H_2S$-Strom, der im wesentlichen kein anderes Reduktionsmittel enthält, bei einer Temperatur von 425°C bis 725°C behandelt wird, um den Katalysator zu bilden.

2. Verfahren nach Anspruch 1, bei dem die Temperatur in Stufe (e) 500°C bis 600°C beträgt.

7

**3.** Verfahren nach Anspruch 1 oder 2, bei dem in Stufe (b) die sauer gepufferte Lösung Essigsäure und NaOH ist.

**4.** Verfahren nach einem der Ansprüche 1 bis 3, bei dem in Stufe (b) der pH-Wert 4,2 beträgt.

**5.** Verfahren nach einem der Ansprüche 1 bis 4, bei dem die Rhenium enthaltende Verbindung eine $ReO_4{}^-$ enthaltende Verbindung ist.

**6.** Verfahren nach einem der Ansprüche 1 bis 5, bei dem die Rhenium enthaltende Verbindung $(NH_4)ReO_4$ oder $Re_2O_7$ umfaßt.

**7.** Verfahren nach einem der Ansprüche 1 bis 6, bei dem Stufe (e) über einen Zeitraum von 1 bis 4 Stunden durchgeführt wird.

**8.** Verfahren nach einem der Ansprüche 1 bis 7, bei dem der gewonnene Katalysator eine katalytische Aktivität gemessen durch die Aktivitätsratenkonstante für die Hydrodesulfurierung von Dibenzothiophen (DBT) in Dekalin von mehr als etwa $200 \times 10^{16}$ Moleküle DBT umgewandelt/sec g Katalysator besitzt.

**9.** Verfahren nach einem der Ansprüche 1 bis 8, das die Stufe des Kombinierens eines Trägermaterials mit dem Produkt aus Stufe (e) umfaßt.

**10.** Verfahren nach Anspruch 9, bei dem das Trägermaterial ein saures oder gemischtes Oxid, ein Übergangsmetallsulfid oder Kohle ist.

**11.** Verfahren nach Anspruch 10, bei dem das saure oder gemischte Oxid Aluminiumoxid, Siliciumdioxid, Siliciumdioxid-Aluminiumoxid, Titandioxid, Vanadinoxid, Nioboxid oder ein Übergangsmetalloxid, das Übergangsmetallsulfid Molybdänsulfid und die Kohle Aktivkohle oder Graphitkohle ist.

**12.** Wasserstoffbehandlungsverfahren wie ein Hydrodesulfurierungsverfahrens, bei dem ein Kohlenwasserstoffeinsatzmaterial mit einem nach dem Verfahren gemäß einem der Ansprüche 7 bis 11 hergestellten Katalysator unter Wasserstoffbehandlungsbedingungen kontaktiert wird.

**Revendications**

**1.** Procédé de production d'un catalyseur d'hydrotraitement de formule $ReS_{2+x}$, dans laquelle $1 \geq x > 0$, qui comprend les étapes qui consistent à :
   (a) former une solution aqueuse d'un composé contenant du rhénium;
   (b) traiter la solution aqueuse de l'étape (a) avec une solution acide tamponnée pour obtenir un pH compris entre 4,0 et 4,5;
   (c) purger la solution résultante de l'étape (b) avec $H_2S$ et chauffer;
   (d) séparer la solution de l'étape (c) et rincer le produit solide restant avec $H_2O$; et
   (e) traiter le produit de l'étape (d) avec un courant de $H_2S$ ne contenant pratiquement pas d'autre réducteur, à une température de 425°C à 725°C, pendant suffisamment longtemps pour former le catalyseur.

**2.** Procédé selon la revendication 1, dans lequel la température de l'étape (e) est de 500°C à 600°C.

**3.** Procédé selon la revendication 1 ou la revendication 2, dans lequel, dans l'étape (b), la solution acide tamponnée est de l'acide acétique et NaOH.

**4.** Procédé selon l'une quelconque des revendications 1 à 3, dans lequel, dans l'étape (b), le pH est de 4,2.

**5.** Procédé selon l'une quelconque des revendications 1 à 4, dans lequel le composé contenant du rhénium est un composé contenant $ReO_4{}^-$.

**6.** Procédé selon l'une quelconque des revendications 1 à 5, dans lequel le composé contenant du rhénium comprend $(NH_4)ReO_4$ ou $Re_2O_7$.

**7.** Procédé selon l'une quelconque des revendications 1 à 6, dans lequel l'étape (e) est réalisée pendant une durée de 1 à 4 heures.

**8.** Procédé selon l'une quelconque des revendications 1 à 7, dans lequel le catalyseur récupéré a une activité catalytique, mesurée par la constante de la vitesse d'activité pour l'hydrodésulfuration du dibenzothiophène (DBT) dans la décaline, supérieure à environ $200 \times 10^{16}$ molécules de DBT converties/s.g de catalyseur.

**9.** Procédé selon l'une quelconque des revendications 1 à 8, comprenant l'étape qui consiste à combiner une matière de support avec le produit de l'étape (e).

**10.** Procédé selon la revendication 9, dans lequel la matière de support est un oxyde acide ou mixte, un sulfure de métal de transition ou du carbone.

**11.** Procédé selon la revendication 10, dans lequel l'oxyde acide ou mixte est l'alumine, la silice, la silice-alumine, l'oxyde de titane, l'oxyde de vanadium, l'oxyde de niobium, ou un oxyde d'un métal de transition quelconque, le sulfure d'un métal de transition est le sulfure de molybdène et le carbone est du charbon actif ou un carbone de type graphite.

**12.** Procédé d'hydrotraitement, tel qu'un procédé d'hydrodésulfuration, comprenant la mise en contact d'une charge d'hydrocarbures avec un catalyseur fabriqué par le procédé selon l'une quelconque des revendications 7 à 11, dans des conditions d'hydrotraitement.

# METHOD OF PRODUCING ReS$_x$ HDS CATALYST

PRECURSOR

CATALYST

| | | | | |
|---|---|---|---|---|
| Re$_2$O$_7$ OR (NH$_4$)ReO$_4$ | pH $\cong$ 4.0 – 4.5  Re O$_4$ $\cong$ 0.1 TO  0.15  g/ml . H$_2$O | AMORPHOUS Re S$_{2+x}$ PRECURSOR (SURFACE AREA $\geq$ 40m$^2$/g) | 425°C – 725°C | Re S$_{2+x}$ CATALYST  0 < X $\leq$ 1 |
| H$_2$O  1 | H$_2$S   NaOH   BUFFER  2 | 3 | H$_2$S  4 | 5 |

## FIG.1

EP 0 310 443 B1

X-RAY DIFFRACTION PATTERN FOR $ReS_x$ CATALYSTS
AFTER $H_2S$ HEAT TREAT
(HIGH SURFACE AREA PRECURSOR)

FIG.2

EP 0 310 443 B1

# $FeS_x$ HDS ACTIVITY VS TEMPERATURE OF HEAT TREAT

Set A (100% $H_2S$)

Set B (100% $H_2S$)

Set C (15% $H_2S/H_2$)

K x $10^{16}$ Molecules DBT Conv/Sec g Cat

Temperature of heat treat (°C)

# FIG. 3